# EUROPEAN PATENT SPECIFICATION

(11) **EP 3 329 052 B1**
(45) Date of publication and mention of the grant of the patent: **11.05.2022**
(21) Application number: 15775517.4
(22) Date of filing: 20.08.2015
(51) Int. Cl.: E02D 7/18, E02D 11/00, E02D 9/02

(54) **A GRIPPING MACHINE**
GREIFMASCHINE
MACHINE DE PRÉHENSION

(30) Priority: 29.07.2015 TR 201509420
(43) Date of publication of application: 06.06.2018
(73) Proprietor: Ozkan, Aydin, 06930 Sincan / Ankara (TR)
(72) Inventor: Ozkan, Aydin, 06930 Sincan / Ankara (TR)
(74) Representative: Berkkam, Ayfer
(86) International application number: PCT/TR2015/000283
(87) International publication number: WO 2017/018951

(56) References cited:
- EP-A1- 0 496 167
- EP-A1- 2 003 252
- EP-A1- 2 597 204
- EP-B1- 0 496 167
- EP-B1- 2 597 204
- CA-A1- 2 634 402
- US-A- 4 703 968
- US-A- 5 626 457
- US-A- 5 711 565
- US-A1- 2013 121 771
- US-B1- 6 691 797
- US-B2- 8 833 823
- None

## Description

### Technical Field

The present invention relates to a gripping machine which is used for driving and extracting applications of steel-formed materials, profiles and steel pipes called as sheet piles.

### Background of the Invention

Vibro drivers are used in a wide area upon being mounted on pieces such as steel-formed pipes, profiles; and for the purpose of driving these pieces into the ground or extracting them from the ground. Vibro drivers perform the operation of driving pipe or profiles into the ground by means of their eccentric weights. Steel-formed pipes can enter the ground easily owing to the vibration occurring by means of these weights. Part of the said vibro drivers is positioned onto these steel pipes directly and it is ensured that the steel pipe proceeds inside the ground by means of the vibration generated by thereof. Whereas part of vibro drivers receives this steel pipe, which is preferred to be driven, from a position parallel to the ground plane and takes it to a position vertical to the ground plane and thus enables it to be driven. Part of these vibro driver clutches used today holds the pipe wall thickness by means of a clamp and thereby takes the steel pipe to a vertical position ready to be driven to the ground plane from the parallel position. These type of clamp systems ensure that only pipes with a certain wall thickness are lifted and also their movements during the lifting process is uncontrolled. In addition to this; some clutches grip these components, which generally have a cylindrical structure, from their circumference and take them from horizontal position into vertical position.

The European Patent document no. EP2597204**,** an application in the state of the art, discloses a clamp member which is used for placing the metal plates on a ground. A clamp structure (3) having gripping jaws (6a, 6b) is placed on a vibratory driver. In the invention, a mechanism which holds plate parts and transmits the vibration received from the vibrator to the sheet metal is disclosed.

The European Patent document no. EP0496167**,** another application in the state of the art, discloses a clamp structure which can be moved in a horizontal and a vertical axis by a remote control. Freedom of mobility is provided in carrying components with the said clamp structure.

United States Patent document no. US4703968A discloses a rail grapple attachable to a boom structure of a hydraulic excavator in order to pick up railroad rail and orient them into upright position. The rail grapple includes a frame having a pair of rigid mounting ears integral therewith and extending therefrom in opposite directions. A front jaw is pivotally secured to frame by a mounting pin extending through a tubular shaft. Grapple also includes a back jaw having an inner portion and an outer portion which is spaced from the inner portion to receive to front jaw tine therebetween in interleaving relation. The back jaw is pivotally secured to frame by a mounting pin extending through a tubular shaft as well. The front and back jaws include gear plates having a plurality of gear teeth and hydraulic cylinders are pivotally secured to the front and back jaws in order to form drive means for the jaws.

United States Patent document no. US5626457A discloses a grapple adapted for manipulating and hammering objects. The grapple includes two jaws each of which has a pivot end a jaw tip. Each jaw also includes a weldment on the pivot end pivotally connected to a grapple body assembly. Timing gears are fixed to the weldment which cooperatively mesh to maintain the jaws in an equal relation with respect to the axis when closing and opening. A grapple actuation means such as a linear actuator is connected between each respective weldment and in combination with the pivotal connection allows the jaws to pivot to an open or a closed position in response to the grapple actuation means, and thereby also allowing free rotation about axis while opening and closing.

United States Patent document no. US5711565A discloses a universal handling mechanism for engaging containers of different sizes and shapes. An engaging mechanism includes at least two engaging members, such as elongate arms. The arms are rigidly connected to arm plates with shoulders providing further support for the arms. The plates are connected to arm supports, which are in turn rigidly connected to pivot pins. Gears are pivotally connected to pivot pins. A hydraulic or air cylinder links an intermediate portion of a boom or a lift arm, by means of an ear, to triangular support connected to arm.

### Summary of the Invention

An objective of the present invention is to realize a gripping machine whereby all kinds of components preferred to be driven can be driven.

Another objective of the present invention is to realize a gripping machine which can grip a component preferred to be driven and applies sufficient force to this component.

### Detailed Description of the Invention

"A gripping machine" realized to fulfill the objectives of the present invention is shown in the figures attached, in which:

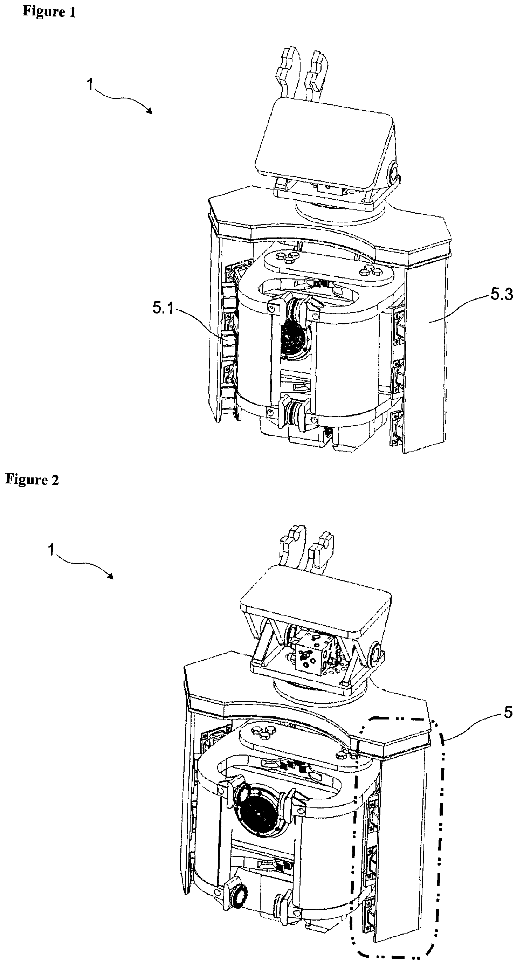

**Figure 1** is a perspective view of the gripping machine in a gripping status.
**Figure 2** is a perspective view of the gripping machine in a non-gripping status.

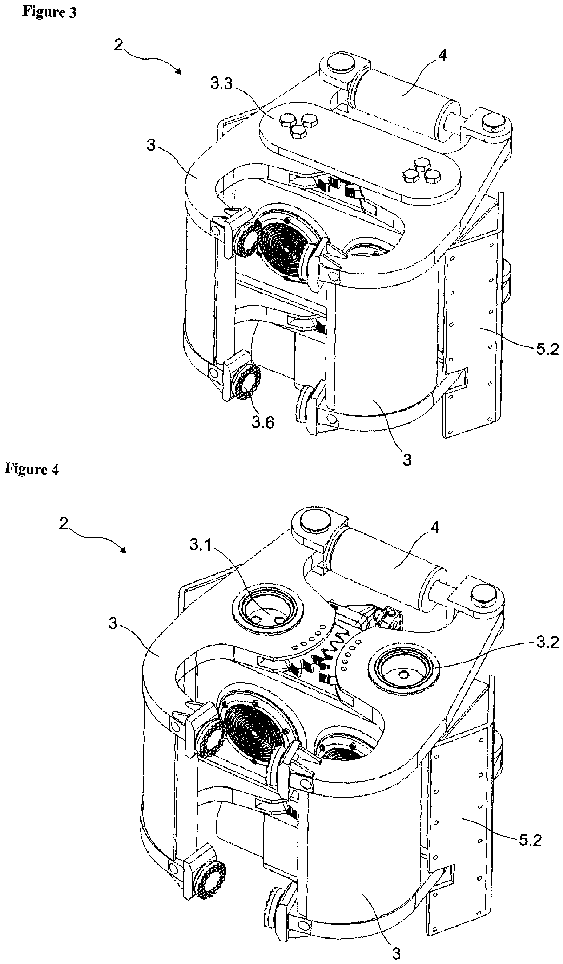

**Figure 3** is a perspective view of the gripping unit together with the housing plate.
**Figure 4** is a perspective view of the gripping unit together without the housing plate.

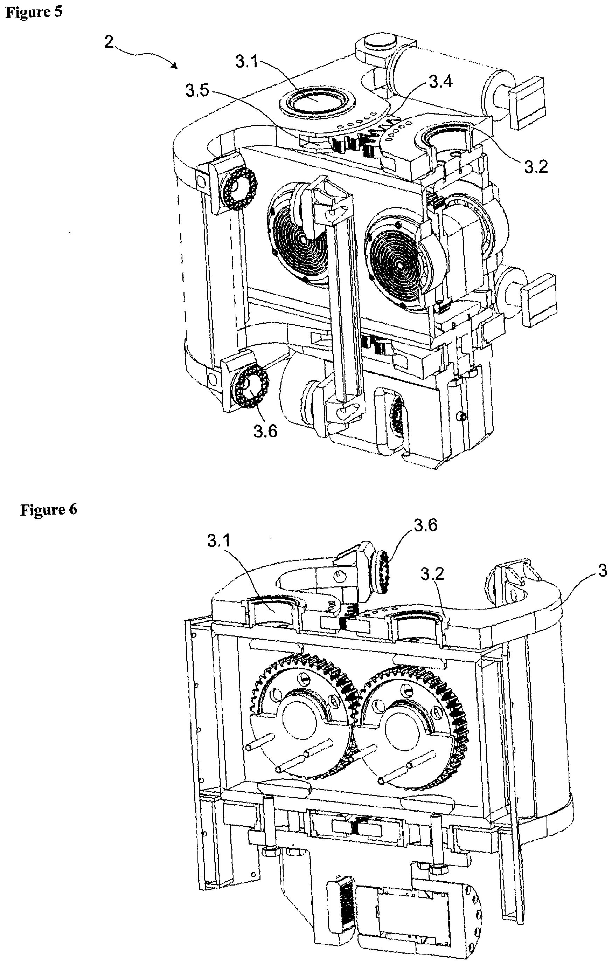

**Figure 5** is a perspective view of cross-sectional status of the gripping unit.
**Figure 6** is a perspective view of another cross-sectional status of the gripping unit.

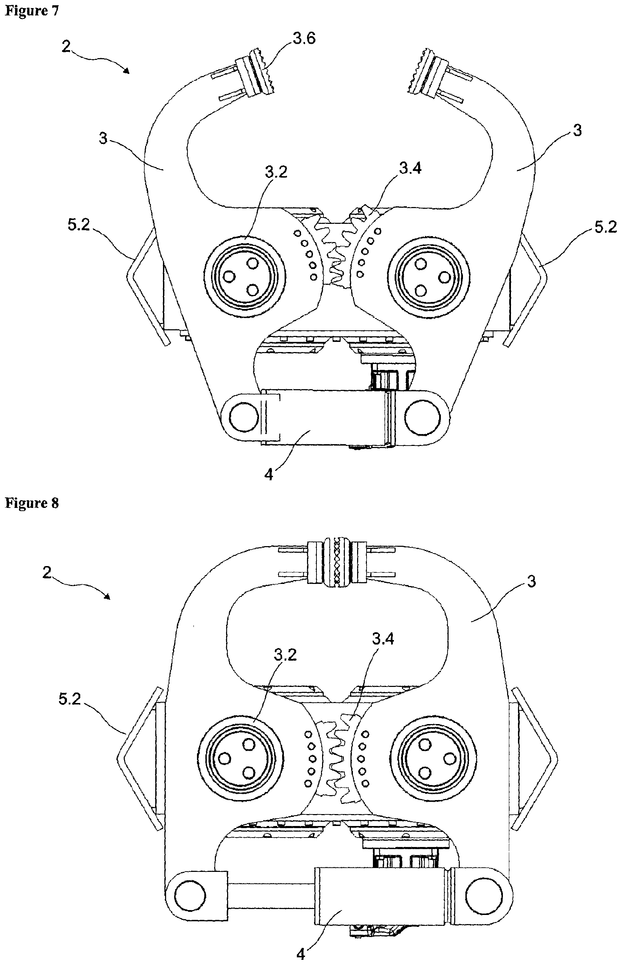

**Figure 7** is an upper view of the gripping unit in a non-gripping status.
**Figure 8** is an upper view of the gripping unit in a gripping status.

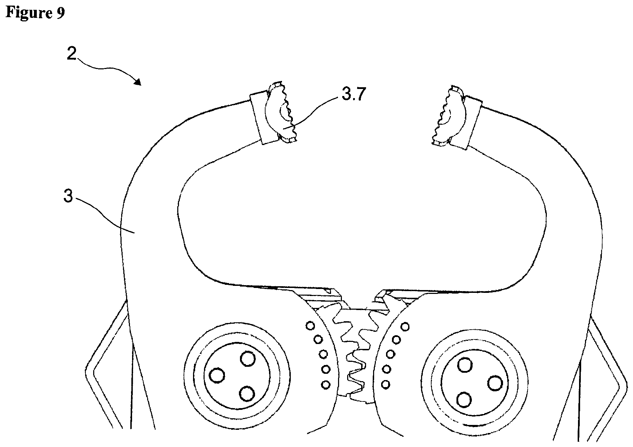

**Figure 9** is an upper view of the cross-sectional status of the pad so that the spherical member is seen in a non-gripping status of the gripping unit.

The components illustrated in the figures are individually numbered, where the numbers refer to the following:
**1.** Gripping machine
**2.** Gripping unit
**3.** Gripping member
   **3.1.** Hole
   **3.2.** Bearing
   **3.3.** Housing plate
   **3.4.** Gear
   **3.5.** Slot
   **3.6.** Pad
   **3.7.** Spherical member
**4.** Driver
**5.** Wedge assembly
   **5.1.** Wedge
   **5.2.** Wedge surfaces
   **5.3.** Wedge housing

The gripping machine which is used for driving and extracting applications of steel-formed materials, profiles and steel pipes called as sheet piles (1) essentially comprises:
- at least one gripping unit (2) which grips and holds steel-formed materials, profiles and steel pipes and also enables these materials to be positioned to the ground in a preferred angle during driving;
- at least two gripping members (3) which are located on both sides of the gripping unit (2) and operates synchronously so as to hold the material to be gripped;
- at least one hole (3.1) which is located in a region close to the centre of the gripping member (3) and bored so as to fix the gripping member (3) to the gripping unit (2);
- at least one bearing (3.2) which is located in the hole (3.1) and composed so that the gripping member (3) makes a turn around the centreline of this hole (3.1);
- gear (3.4) which is positioned in a region close to the hole (3.1) so that the gripping members (3) operate synchronously and also the pressure force is distributed in a balanced way;
- at least one pad (3.6) which is composed so as to provide entire attachment of the materials to be gripped;
- at least one driver (4) which is positioned on one end of the gripping members (3) and enables the gripping members (3) to move synchronously by applying pressure to both gripping members (3).

In the gripping machine (1) provided in one embodiment of the invention, there is a gripping unit (2) which is used for gripping steel-formed materials, profiles and steel pipes called as sheet piles and for keeping them in this status. The gripping unit (2) grips these materials when they are in a parallel position to the ground plane upon preference and takes them to a position vertical to the ground plane or to any angle that will be driven to the ground by keeping them in this way. Due to the fact that the gripping and keeping transaction is very strong, the material to be drilled can proceed into the ground directly when a vibration occurs in the gripping unit (2). The wedge assembly (5) is located around the gripping unit (2). The wedge assembly (5) is generated in order to prevent the strong vibration occurring in the gripping unit (2) from being transmitted to the lifts holding the gripping machine (1). There are wedge surfaces (5.2) which are angularly positioned on side parts of the gripping unit (2) in the wedge assembly (5). A large proportion of the vibration occurring in the gripping unit (2) can be absorbed by means of the fact that these wedge surfaces (5.2) are angularly positioned. A plurality of wedges (5.1) is positioned on the wedge surfaces (5.2). These wedges (5.1) are preferably made of rubber material. Thus, vibrations occurring in the gripping unit (2) directly affect these wedges (5.1). These wedges (5.1) absorb all vibration by collecting them on themselves and thus do not bring any damage to lifting machines such as excavator whereby the gripping machine (1) is lifted due to the fact that they are preferably made of rubber material. One part of the wedges (5.1) faces the wedge surfaces (5.2) while the other part thereof faces the wedge housing (5.3). The wedge housing (5.3) provides attachment of both the wedges (5.1) and also the gripping unit (2). Whereas the gripping unit (2) provided in the gripping machine (1) generally consists of two gripping members (3). One driver (4) is mounted to one end of the gripping member (3) so as to provide motion whereas one pad (3.6) is mounted to the other end thereof so that the gripping occurs in a more effective way. A hole (3.1) is provided in the middle part of the gripping member (3) and there is a bearing (3.2) inside this hole (3.1). The gripping member (3) and a vibrator generating vibration can be connected to each other by means of a connection member that is passed through this hole (3.1) located in the gripping member (3). A substantial resistance is given to the hole (3.1) against stresses due to the fact that a bearing (3.2) is fit into the hole (3.1). A housing plate (3.3) is positioned on the upper part of the holes (3.1) in the gripping member (3). By means of this housing plate (3.3), both gripping members (3) are connected to each other and the arising vibrations can be responded synchronously by means of the housing plate (3.3). Besides, two reciprocal gripping members (3) can also be engaged by means of the housing plate (3.3). In the gripping member (3), there is a gear (3.4) in a region close to the hole (3.1) and also a slot (3.5) wherein these gears (3.4) are maintained and they can be easily disassembled and removed from inside thereof. These gears (3.4) are provided in each of the gripping members (3), the said gears (3.4) are located such that they are engaged and they move in the event that the gripping member (3) is moved around the centreline of the hole (3.1). Due to the fact that these gears (3.4) are placed to a part close to the region where the hole (3.1) is located, a large part of the forces generated by means of the driver (4) are loaded onto these gears (3.4) and thus the value of load reaching the bearing (3.2) located inside the hole (3.1) and the connection member is reduced. The gear (3.4) located in the gripping member (3) is placed into a slot (3.5) here and this gear (3.4) can be easily taken out of the slot (3.5) whenever it is preferred. Thus, the gear (3.4) can be taken out of the slot (3.5) upon being removed and it can be replaced with the new one easily in the event that it is subjected to any breakdown. One pad (3.6) is provided in one end of the gripping member (3). This pad (3.6) is preferably a SAE 4140 steel material, contacts with the component preferred to be gripped and prevents the component from slipping from among the gripping members (3) by providing abrasion resistance by means of the characteristic of SAE 4140 steel. The pad (3.6) can be made of SAE 4140 steel and it can also be made of any kind of steel material that sets a precedent. There is also a spherical member (3.7) inside the pad (3.6) and the spherical member (3.7) has the characteristic of moving freely. The spherical member (3.7) enables the pad (3.6) to be rotated in certain values and thus to fit into the component demanded to be gripped entirely. The driver (4) is mounted to the other end of the gripping member (3) which is not the pad (3.6). The driver (4) is preferably a hydraulic piston. One end of the driver (4) is mounted to the gripping member (3) while the other end thereof is mounted to another gripping member (3). The gripping member (3) ends which are connected to the driver (4) move away from each other and in addition to this the ends where the pads (3.6) are connected approach each other in the event that the driver (4) moves in the opening direction. In cases when it is preferred that gripping is realized, the driver (4) is proceeded in the opening direction and thus the pads (3.6) move towards each other and holds the component demanded to be gripped. In the event that it is preferred to release the gripped component, the driver (4) is proceeded in the closing direction and in this case, the gripping members (3) end where the driver (4) is connected moves towards each other whereas the ends thereof where the pad (3.6) is connected move in a direction opposite to each other. In this way, the component gripped can be released again.

Operation of the gripping machine (1) is realized as follows: In the event that it is preferred to drive or extract steel-formed materials, profiles and steel pipes called as sheet piles; the gripping machine (1) is approached to the component preferred to be gripped by means of a lift and then the driver (4) is moved in the closing direction. In the event that the driver (4) is moved in the closing direction, the pads (3.6) move away from each other and this transaction continues until the distance between the pads (3.6) is bigger than the diameter of the component preferred to be gripped. After the distance between the pads (3.6) is widened as much as preferred, the component to be gripped is placed between these gripping members (3) and afterwards the driver (4) is moves in the opening direction. In case of this movement, the pads (3.6) proceed towards each other and grip the component to be hold after a while. Henceforth, a further amount of power is given to the driver (4) and thus the component to be gripped is compressed between the pads (3.6) entirely and the component is made ready to be driven/extracted. Henceforward, the driving/extracting process is realized by giving vibration to the gripping machine (1). After the driving/extracting process is completed, the driver (4) is again proceeded in the closing direction this time and enables the pads (3.6) to be removed from each other and thus causes the gripped component to be released. Thus, the driving/extracting process is performed.

## Claims

1. A gripping machine (1) which is suitable for driving and extracting applications of steel-formed materials, profiles and steel pipes called as sheet piles (1) **comprising:**
- at least one gripping unit (2) which grips and holds steel-formed materials, profiles and steel pipes and also enables these materials to be positioned to the ground in a preferred angle during driving;
- at least two gripping members (3) which are located on both sides of the gripping unit (2) and operates synchronously so as to hold the material to be gripped;
- at least one hole (3.1) which is located in a region close to the centre of the gripping member (3) and bored so as to fix the gripping member (3) to the gripping unit (2);
- at least one bearing (3.2) which is located in the hole (3.1) and composed so that the gripping member (3) makes a turn around the centreline of this hole (3.1);
- gear (3.4) which is positioned in a region close to the hole (3.1) so that the gripping members (3) operate synchronously and also the pressure force is distributed in a balanced way;
- at least one driver (4) which is positioned on one end of the gripping members (3) and enables the gripping members (3) to move synchronously by applying pressure to both gripping members (3) **and characterized by**
- a housing plate (3.3) which is positioned on the upper part of the hole (3.1) in each gripping member (3) and connects both gripping members (3) to each other and enables to respond the arising vibrations synchronously,
- at least one pad (3.6) which is composed so as to provide entire attachment of the materials to be gripped.

2. A gripping machine (1) according to Claim 1, **characterized by** the wedge assembly (5) which is located around the gripping unit (2) and is generated in order to prevent the strong vibration occurring in the gripping unit (2) from being transmitted to the lifts holding the gripping machine (1).

3. A gripping machine (1) according to Claim 2, , **characterized by** the wedge surfaces (5.2) which are angularly positioned on side parts of the gripping unit (2) in the wedge assembly (5) and a large proportion of the vibration occurring in the gripping unit (2) can be absorbed by means of the fact that they are angularly positioned.

4. A gripping machine (1) according to Claim 2, , **characterized by** the wedge (5.1) which are positioned on the wedge surfaces (5.2) more than one and preferably made of rubber material.

5. A gripping machine (1) according to Claim 1, **characterized by** the gripping member (3) wherein one driver (4) is mounted to one end thereof so as to provide motion whereas one pad (3.6) is mounted to the other end thereof so that the gripping occurs in a more effective way.

6. A gripping machine (1) according to Claim 1, **characterized by** the hole (3.1) which is provided in the middle part of the gripping member (3) and there is a bearing (3.2) inside thereof and also ensures that the gripping member (3) and a vibrator generating vibration can be connected to each other by means of a connection member that is passed through thereof.

7. A gripping machine (1) according to Claim 1, **characterized by** the gear (3.4) which is located in a region close to the hole (3.1) in the gripping member (3) and moves in the event that the gripping member (3) is moved around the centreline of the hole (3.1).

8. A gripping machine (1) according to Claim 1, **characterized by** the slot (3.5) wherein the gear (3.4) located in the gripping member (3) is placed and the gear (3.4) can be easily taken out of it whenever it is preferred.

9. A gripping machine (1) according to Claim 1, **characterized by** the pad (3.6) which is located in the end of the gripping member (3) and is a SAE 4140 material, contacts with the component preferred to be gripped and prevents the component from slipping from among the gripping members (3) by providing abrasion resistance by means of the characteristic of SAE 4140 steel.

10. A gripping machine (1) according to Claim 1, **characterized by** the spherical member (3.7) which is located inside the pad (3.6) and has the characteristic of moving freely, thus enables the pad (3.6) to be rotated in certain values and to fit into the component requested to be gripped entirely.

11. A gripping machine (1) according to Claim 1, **characterized by** the driver (4) which is mounted to the other end of the gripping member (3) that is not the pad (3.6), and is preferably a hydraulic piston.

12. A gripping machine (1) according to Claim 1, **characterized by** the driver (4) one end of which is mounted to the gripping member (3) while the other end thereof is mounted to another gripping member (3).

13. A gripping machine (1) according to Claim 1, **characterized by** the gripping member (3) ends of which that are connected to the driver (4) move away from each other and in addition to this the ends thereof where the pads (3.6) are connected approach each other in the event that the driver (4) moves in the opening direction.

14. A gripping machine (1) according to Claim 1, **characterized by** the driver (4) which is proceeded in the opening direction and thereby moves the pads (3.6) towards each other and thus ensures that the component demanded to be gripped is hold in cases when it is preferred that gripping is realized.

15. A gripping machine (1) according to Claim 1, **characterized by** the driver (4) which is moved in the closing direction in the event that it is preferred to release the gripped component and in this case, the gripping members (3) ends where the pad (3.6) is connected move in a direction opposite to each other.

## Patentansprüche

1. Greifmaschine (1), die zum Eintreiben und Herausziehen von Anwendungen aus stahlgeformten Materialien, Profilen und Stahlrohren, die als Spundwände (1) bezeichnet werden, geeignet ist, **umfassend:**
- mindestens eine Greifeinheit (2), die stahlgeformte Materialien, Profile und Stahlrohre greift und hält und es auch ermöglicht, diese Materialien während des Eintreibens in einem bevorzugten Winkel zum Boden zu positionieren;
- mindestens zwei Greifelemente (3), die auf beiden Seiten der Greifeinheit (2) befindet und synchron arbeiten, so dass sie das zu greifende Material halten;
- mindestens ein Loch (3.1), das sich in einem Bereich nahe der Mitte des Greifelements (3) befindet und derart gebohrt ist, dass das Greifelement (3) an der Greifeinheit (2) befestigt wird;
- mindestens ein Lager (3.2), das sich in das Loch (3.1) befindet und derart zusammengesetzt ist, dass das Greifelement (3) eine Drehung um die Mittellinie dieser Loch (3.1) ausführt;
- ein Zahnrad (3.4), das in einem Bereich nahe das Loch (3.1) positioniert ist, so dass die Greifelemente (3) synchron arbeiten und auch die Druckkraft gleichmäßig verteilt wird;
- mindestens einen Antrieb (4), der an einem Ende der Greifelemente (3) positioniert ist und eine synchrone Bewegung der Greifelemente (3) durch Ausübung von Druck auf beide Greifelemente (3) ermöglicht **und gekennzeichnet durch**
- eine Gehäuseplatte (3.3), die auf dem oberen Teil das Loch (3.1) in jedem Greifelement (3) positioniert ist und beide Greifelemente (3) miteinander verbindet und es ermöglicht, auf die entstehenden Schwingungen synchron zu reagieren,
- mindestens ein Pad (3.6), welches so zusammengesetzt ist, dass es die vollständige Befestigung der zu greifenden Materialien vorsieht.

2. Greifmaschine (1) nach Anspruch 1, **gekennzeichnet durch** die Keilanordnung (5), die um die Greifeinheit (2) herum befindet und erzeugt wird, um zu verhindern, dass sich die starken Schwingungen, die in der Greifeinheit (2) entstehen, auf die Lifte übertragen, die die Greifmaschine (1) halten.

3. Greifmaschine (1) nach Anspruch 2 **gekennzeichnet durch** die Keilflächen (5.2), die an Seitenteilen der Greifeinheit (2) in die Keilanordnung (5) winklig positioniert sind und einen großen Teil der in der Greifeinheit (2) entstehenden Schwingungen aufnehmen können, weil sie winklig positioniert sind.

4. Greifmaschine (1) nach Anspruch 2, **gekennzeichnet durch** die mehr als einen auf den Keilflächen (5.2) positionierten, vorzugsweise aus Gummimaterial bestehenden Keile (5.1).

5. Greifmaschine (1) nach Anspruch 1, **gekennzeichnet durch** das Greifelement (3), wobei ein Antrieb (4) an einem Ende desselben montiert ist, um eine Bewegung zu bewirken, während ein Pad (3.6) an dem anderen Ende desselben montiert ist, so dass das Greifen auf eine effektivere Weise erfolgt.

6. Greifmaschine (1) nach Anspruch 1, **gekennzeichnet durch** das Loch (3.1), das im mittleren Teil des Greifelementes (3) vorgesehen ist und ein Lager (3.2) im Inneren desselben aufweist und auch sicherstellt, dass das Greifelement (3) und ein Schwingungen erzeugender Schwinger mittels eines Verbindungselementes, das durch dieses hindurchgeführt ist, miteinander verbunden werden können.

7. Greifmaschine (1) nach Anspruch 1, **gekennzeichnet durch** das Zahnrad (3.4), das in einem Bereich nahe das Loch (3.1) im Greifelement (3) befindet und sich bewegt, falls das Greifelement (3) um die Mittellinie das Loch (3.1) bewegt wird.

8. Greifmaschine (1) nach Anspruch 1, **gekennzeichnet durch** den Schlitz (3.5), wobei das Zahnrad (3.4), das sich in dem Greifelement (3) befindet, platziert ist und das Zahnrad (3.4) leicht herausgenommen werden kann, wenn es bevorzugt wird.

9. Greifmaschine (1) nach Anspruch 1, **gekennzeichnet durch** das Pad (3.6), das sich am Ende des Greifelements (3) befindet und ein SAE 4140-Material ist, in Kontakt mit dem bevorzugt zu greifenden Bauteil steht und verhindert, dass das Bauteil unter den Greifelementen (3) abrutscht, mit Hilfe der Eigenschaft des SAE 4140-Stahls Abriebfestigkeit vorzusehen.

10. Greifmaschine (1) nach Anspruch 1, **gekennzeichnet durch** das kugelförmige Element (3.7), das sich im Inneren des Pads (3.6) befindet und die Eigenschaft hat, sich frei zu bewegen, sodass das Pad (3.6) um bestimmte Werte gedreht werden kann und sich vollständig an das zu greifende Bauteil anpassen kann.

11. Greifmaschine (1) nach Anspruch 1, **gekennzeichnet durch** den Antrieb (4), der an dem anderen Ende des Greifelementes (3), das nicht das Pad (3.6) ist, montiert ist, und vorzugsweise ein hydraulischer Kolben ist.

12. Greifmaschine (1) nach Anspruch 1, **gekennzeichnet durch** den Antrieb (4), der mit einem Ende an dem Greifelement (3) und mit dem anderen Ende an einem anderen Greifelement (3) montiert ist.

13. Greifmaschine (1) nach Anspruch 1, **gekennzeichnet durch** das Greifelement (3), dessen mit dem Antrieb (4) verbundene Enden sich auseinander bewegen und zusätzlich dessen mit den Pads (3.6) verbundene Enden sich einander annähern, falls sich der Antrieb (4) in Öffnungsrichtung bewegt.

14. Greifmaschine (1) nach Anspruch 1, **gekennzeichnet durch** den Antrieb (4), der in Öffnungsrichtung verfahren wird und dadurch die Pads (3.6) zueinander bewegt und somit sicherstellt, dass das zu greifende Bauteil gehalten wird, wenn es bevorzugt ist, dass das Greifen realisiert wird.

15. Greifmaschine (1) nach Anspruch 1, **gekennzeichnet durch** den Antrieb (4), der in Schließrichtung bewegt wird, falls es bevorzugt wird, das greifende Bauteil freizugeben, und in diesem Fall bewegen sich die Enden der Greifelemente (3), an denen das Pad (3.6) angeschlossen ist, in entgegengesetzter Richtung zueinander.

## Revendications

1. Machine de préhension (1) adaptée aux applications d'entraînement et d'extraction de matériaux en acier, de profilés et de tubes en acier appelés palplanches (1) **comprenant:**
- au moins une unité de préhension (2) saisissant et maintenant les matériaux formés en acier, les profilés et les tuyaux en acier et permettant également à ces matériaux d'être positionnés au sol selon un angle préféré pendant l'entrainement;
- au moins deux éléments de préhension (3) qui sont situés de part et d'autre de l'unité de préhension (2) et qui fonctionnent de manière synchrone afin de maintenir le matériau à saisir;
- au moins un trou (3.1), situé dans une région proche du centre de l'élément de préhension (3) et percé de manière à fixer l'élément de préhension (3) à l'unité de préhension (2) ;
- au moins un palier (3.2), situé dans le trou (3.1) et composé pour que l'élément de préhension (3) fasse un tour autour de l'axe de ce trou (3.1);
- l'engrenage (3.4) positionné dans une région proche du trou (3.1) de sorte que les éléments de préhension (3) fonctionnent de manière synchrone et que la force de pression soit également répartie de manière équilibrée;
- au moins un entraîneur (4) qui est positionné sur une extrémité des éléments de préhension (3) et qui permet aux éléments de préhension (3) de se déplacer de manière synchrone en appliquant une pression sur les deux éléments de préhension (3) **et caractérisé par**
- une plaque de logement (3.3) positionnée sur la partie supérieure du trou (3.1) de chaque élément de préhension (3) et reliant les deux éléments de préhension (3) l'un à l'autre et permettant de réagir de manière synchrone aux vibrations générées,
- au moins une cale (3.6) composée de manière à assurer une fixation complète des matériaux à saisir.

2. Machine de préhension (1) selon la revendication 1, **caractérisée par** l'ensemble de coin (5) qui est situé autour de l'unité de préhension (2) et qui est généré afin d'empêcher que les fortes vibrations se produisant dans l'unité de préhension (2) ne soient transmises aux ascenseurs tenant la machine de préhension (1).

3. Machine de préhension (1) selon la revendication 2, **caractérisé par** les surfaces de coin (5.2) qui sont positionnées angulairement sur des parties latérales de l'unité de préhension (2) dans l'ensemble de coin (5) et une grande partie des vibrations se produisant dans l'unité de préhension (2), peut être absorbée au moyen du fait qu'elles sont positionnées angulairement.

4. Machine de préhension (1) selon la revendication 2, **caractérisée par** les coins (5.1) qui sont positionnés sur les surfaces de coin (5.2) plus d'une et de préférence en matériau caoutchouteux.

5. Machine de préhension (1) selon la revendication 1, **caractérisée par** l'élément de préhension (3) dans lequel un entraîneur (4) est monté à une extrémité de celui-ci de manière à fournir un mouvement tandis qu'une cale (3.6) est montée à l'autre extrémité de celui-ci de manière à que la préhension s'effectue plus efficacement.

6. Machine de préhension (1) selon la revendication 1, **caractérisé par** le trou (3.1) qui est envisagé dans la partie médiane de l'élément de préhension (3) et qu'il y a un palier (3.2) à l'intérieur de celui-ci et garantit également que l'élément de préhension (3) et un vibrateur générant des vibrations peuvent être connectés à l'un à l'autre au moyen d'un élément de connexion traversé par ceux-ci.

7. Machine de préhension (1) selon la revendication 1, **caractérisée par** l'engrenage (3.4) qui est situé dans une région proche du trou (3.1) dans l'élément de préhension (3) et qui se déplace dans le cas où l'élément de préhension (3) est déplacé autour de l'axe du trou (3.1).

8. Machine de préhension (1) selon la revendication 1, **caractérisée par** la fente (3.5) dans laquelle l'engrenage (3.4) qui est situé dans l'élément de préhension (3) est placé et l'engrenage (3.4) peut être retiré facilement de celui-ci chaque fois qu'il est préféré.

9. Machine de préhension (1) selon la revendication 1, **caractérisée par** la cale (3.6) qui est située à l'extrémité de l'élément de préhension (3) et qui est un matériau SAE 4140, en contact avec le composant préféré à saisir et qui empêche le composant de glisser entre les éléments de préhension (3) en fournissant une résistance à l'abrasion au moyen de la caractéristique de l'acier SAE 4140.

10. Machine de préhension (1) selon la revendication 1, **caractérisée par** l'élément sphérique (3.7) qui est situé à l'intérieur de la cale (3.6) et qui a la caractéristique de se déplacer librement, permettant ainsi de faire tourner la cale (3.6) dans certaines valeurs et pour s'emboîter entièrement dans le composant à saisir.

11. Machine de préhension (1) selon la revendication 1, **caractérisée par** l'entraîneur (4) qui est monté à l'autre extrémité de l'élément de préhension (3) qui n'est pas la cale (3.6) et qui est de préférence un piston hydraulique.

12. Machine de préhension (1) selon la revendication 1, **caractérisée par** l'entraînement (4) dont une extrémité est montée sur l'élément de préhension (3) tandis que l'autre extrémité de celui-ci est montée sur un autre élément de préhension (3).

13. Machine de préhension (1) selon la revendication 1, **caractérisée en ce que** les extrémités de l'élément de préhension (3) qui sont reliées à l'entraîneur (4) s'éloignent l'une de l'autre et en plus leurs extrémités où les cales (3.6) reliées se rapprochent l'une de l'autre dans le cas où l'entraîneur (4) se déplace dans le sens de l'ouverture.

14. Machine de préhension (1) selon la revendication 1, **caractérisée par** l'entraînement (4) qui avance dans la direction d'ouverture et déplace ainsi les cales (3.6) l'une vers l'autre et garantit ainsi que le composant à saisir est maintenu dans les cas lorsqu'il est préférable que la préhension soit réalisée.

15. Machine de préhension (1) selon la revendication 1, **caractérisée par** l'entraîneur (4) qui est déplacé dans la direction de fermeture dans le cas où l'on préfère libérer le composant saisi et dans ce cas, les éléments de préhension (3) se terminent là où la cale (3.6) est reliée en mouvement dans une direction opposée l'une à l'autre.
